Europäisches Patentamt

European Patent Office

Office européen des brevets

(11) Publication number: **0 161 625**
**B1**

# EUROPEAN PATENT SPECIFICATION

(45) Date of publication of patent specification: **27.12.90**

(21) Application number: **85105591.3**

(22) Date of filing: **07.05.85**

(51) Int. Cl.⁵: **B 29 C 45/16,** B 29 C 49/22 //
B29K67:00, B29K77:00

(54) Process for producing multi-layer parison.

(30) Priority: **15.05.84 JP 97191/84**

(43) Date of publication of application:
**21.11.85 Bulletin 85/47**

(45) Publication of the grant of the patent:
**27.12.90 Bulletin 90/52**

(84) Designated Contracting States:
**GB IT NL SE**

(56) References cited:
**FR-A-1 548 820**
**GB-A-2 078 171**
**GB-A-2 091 629**
**US-A-3 578 549**

(73) Proprietor: **MITSUBISHI GAS CHEMICAL
COMPANY, INC.
5-2, Marunouchi 2-chome Chiyoda-Ku
Tokyo, 100 (JP)**

(72) Inventor: **Shimizu, Senzo
735-25-2, Odake
Odawara-shi Kanagawa-ken (JP)**
Inventor: **Nagano, Mitsuyasu
2-9-10, Fujimino
Hiratsuka-shi Kanagawa-ken (JP)**
Inventor: **Ishizeki, Tsutomu
95, Shinomiya
Hiratsuka-shi Kanagawa-ken (JP)**
Inventor: **Momose, Yoshiaki
1028-5, Kitayana
Hadano-shi Kanagawa-ken (JP)**

(74) Representative: **Kraus, Walter, Dr. et al
Patentanwälte Kraus, Weisert & Partner
Thomas-Wimmer-Ring 15
D-8000 München 22 (DE)**

Courier Press, Leamington Spa, England.

**Description**

This invention relates to a process for producing a parison having a multi-layer structure according to the preamble of claim 1, and more specifically to a process for producing a multi-layer parison which is a precursor for obtaining a multi-layer container excellent in transparency, gas barrier properties and mechanical strength. Such a process for producing a parison having a multi-layer structure is disclosed in Japanese Laid-Open Patent Application No. 128520/82.

In recent years, hollow containers using thermoplastic resins have found widespread use as containers of cosmetics, food, beverage, etc. because of such advantages as light weight, safety to burst, etc.

In particular, hollow containers made of polyethylene terephthalate have been rapidly developed by improvement in a biaxial stretching and blow molding technique.

However, biaxially oriented containers made of thermoplastic resins composed mainly of polyethylene terephthalate are not of perfect performance. Above all, in case the content with which the containers are filled is food requiring high gas barrier properties, there are drawbacks that taste of the content is lost for lack of gas barrier properties with respect to oxygen and carbon dioxide gas, and so forth.

In order to remedy these drawbacks, an attempt has been already known to provide a three-layer structure wherein two outer layers are made of a thermoplastic polyester resin and a central layer is made of a m-xylylene group-containing polyamide resin (hereinafter called "MX nylon") being a thermoplastic resin having gas barrier properties (Japanese Patent Publication No. 41181/83 and Japanese Laid-Open Patent Applications Nos. 128516/82 and 128520/82).

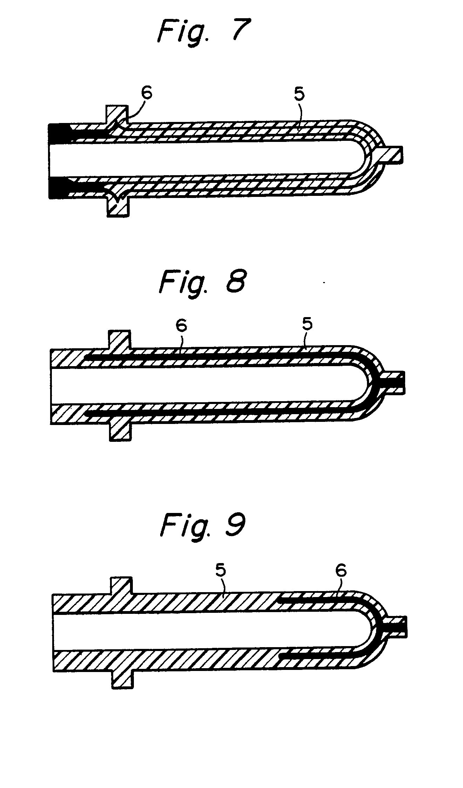

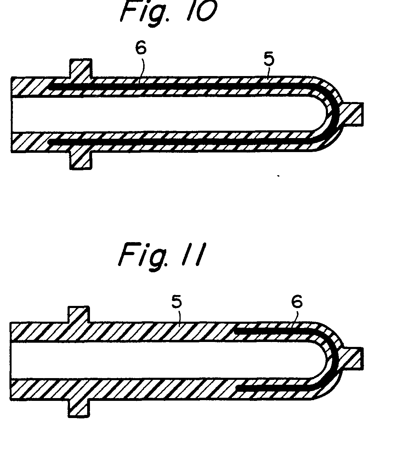

Japanese Patent Publication No. 41181/83 discloses a method for the production of a multi-layer vessel composed of an outer and an inner layer made from a polyester resin having ethylene terephthalate-based recurring units and a middle layer made from a meta-xylylene group-containing polyamide resin. Japanese Laid-Open Patent Publication No. 128516/82 discloses a blow-molded vessel having a multi-layer structure of three or more layers at the thin wall portion of the body thereof and a single layer structure at the open end of the mouth portion thereof, and a method for its production. Japanese Laid-Open Patent Application No. 128520/82 discloses a method for the production of a parison having a three-layer structure which comprises sequentially and alternatively injecting in the molten state at least two types of thermoplastic resins into a single mold with spaced injection timing from a molding machine having a plurality of injection cylinders and one mold closing operation to form an inner and an outer surface layer composed of the first injected thermoplastic resin and a middle layer composed of the subsequentially injected thermoplastic resin. Figure 8 illustrates a sectional view of said three-layer structure.

In the above-described multi-layer containers, the resins having the gas barrier properties, including MX nylon, are inferior in transparency and mechanical strength to thermoplastic polyester resins. Accordingly, if the content of said resins with the gas barrier properties is too high, the performance of the containers is lost. It is therefore advisable to decrease the content of the resins with the gas barrier properties in such range as to meet the gas barrier performance required.

However, in the above-described known method, it is hard to decrease the content of the resins with the gas barrier properties, above all, MX nylon to less than 30% by volume. If the content is forcibly decreased, the resin with the gas barrier properties is present only in part of a parison and a layer free of said resin is provided. When said parison is stretched and blow molded into a container, the gas barrier performance is extremely lowered.

In view of the drawbacks of the conventional method, the present inventors made extensive studies and invented a process for producing a five-layer structure wherein a central layer and two outer layers are made of a thermoplastic resin such as a thermoplastic polyester and two intermediate layers held between the central layer and outer layers are made of thermoplastic resin having gas barrier properties, such as MX-nylon, by which the content of the thermoplastic resin with gas barrier properties can be decreased.

That is, the present invention relates to a process for producing a multi-layer parison comprising layers made of a thermoplastic resin (resin A) other than a thermoplastic resin (resin B) having gas barrier properties and layers made of resin B, said process comprising alternately injecting the molten resins A and B into a single mold in one injection molding cycle using a molding machine having two injection cylinders for resins A and B, which is characterized in that said multi-layer parison has a five-layer structure wherein a central layer and two outer layers are made of resin A and two intermediate layers held between the central layer and two outer layers are made of resin B, and injection of the molten resins A and B is carried out in the order of resin A, resin B and resin A and under the conditions to meet the following equations (1)—(4),

$$V1 \geqq V2 \qquad\qquad (1)$$

$$0.5 \text{ cc/sec} \leqq V2 \leqq 20 \text{ cc/sec} \qquad\qquad (2)$$

$$0.7 \leqq A1/A2 \leqq 3.5 \qquad\qquad (3)$$

$$B1/(A1+A2+B1) \leqq 0.25 \qquad\qquad (4)$$

wherein

V1 is an injection rate per parison of the resin A being injected first,

V2 is an injection rate per parison of the resin A being injected last,
A1 is an injection capacity of the resin A being injected first,
A2 is an injection capacity of the resin A being injected last, and
B1 is an injection capacity of the resin B.

One injection molding cycle in this invention means a series of steps comprising closing a mold, injecting resins into a cavity of the mold to fill the cavity with said resins, cooling the mold and opening the mold to withdraw a molded article.

This invention is explained hereinafter by referring to the drawings.

Figure 1 is a view illustrating a principle of a device for performing the process of this invention.

Figure 2 is a sectional view of a parison obtained in this invention.

Figures 3—7 are sectional views of parisons obtained under conditions deviated from those specified in this invention.

Figure 8 is a sectional view of a parison obtained according to a conventional method.

Figure 9 is a sectional view of a parison obtained with a less amount of the resin B in accordance with the conventional method.

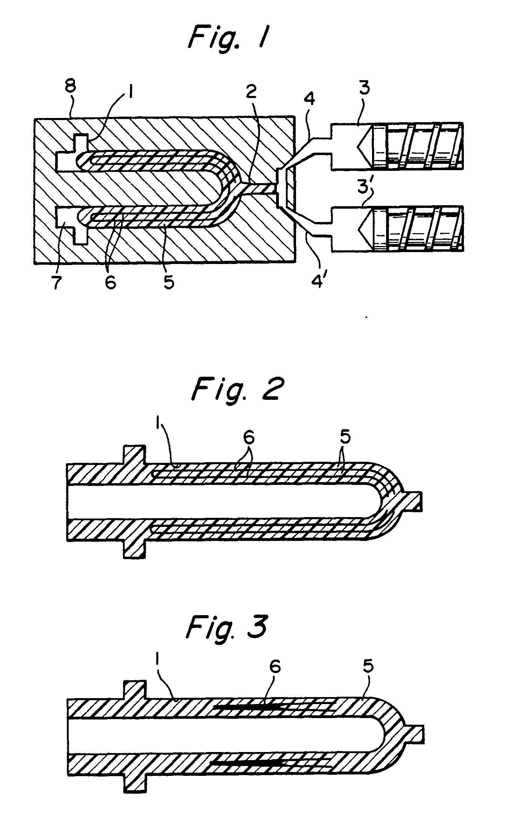

In Figure 1, 1 is a cavity, 2 is a gate, 3 and 3' are cylinders for injecting resins A and B (5, 6: the resins in the mold are shown by an oblique line or solid line yet the resins in the cylinders are not shown in particular), 4 and 4' are nozzles and 8 is a mold. In this case, a valve by which to switch resin channels may be disposed in a gate. In Figure 1, a portion at which the resins leaving the two injection cylinders meet each other is disposed within the mold but it may be placed without the mold. Figure 1 illustrates a state during the injection where the cavity is not completely filled with the resins, and an unfilled portion 7 remains.

An injection molding method is now concretely explained. The resin A is first injected from the injection cylinder 3 and then the resin B from the injection cylinder 3'. The resin A is finally injected again from the injection cylinder 3 until the cavity is completely filled with the resin, and the pressure is maintained. After cooling is over, the mold is opened and a molded article is withdrawn.

The inside of the cavity is completely filled with the resins for the first time when the last injection of the resin A is finished. At the preceding stage, the unfilled portion remains.

Though amounts of resins injected at the respective stages will be later described, a filling percentage in the cavity at the state where the first injection of the resin A ends is about 30—75%.

Through the foregoing steps, a parison having a five-layer structure is obtained such that the resin A injected first forms two outer layers, the resin B injected next forms two intermediate layers and the resin A injected finally forms the central layer. Figure 2 illustrates a sectional view of the parison in this case.

However, in order to obtain the parison having substantially the five-layer structure as shown in Figure 2, it is necessary to inject the resins under the limited conditions, which will be explained below by referring to Figures 3—7 showing sectional views of parisons formed under various conditions.

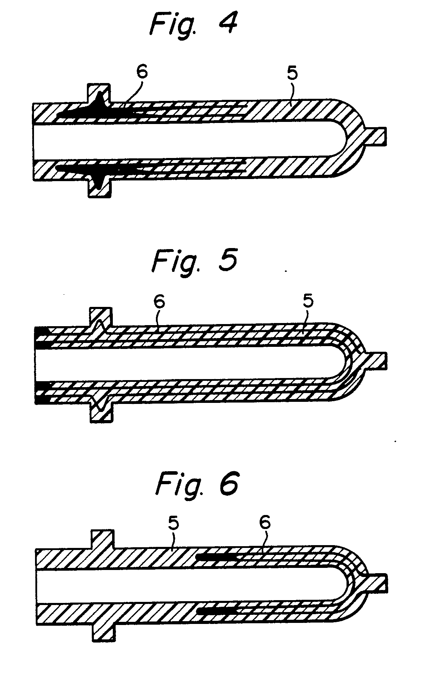

First, as for the injection rates of the resins, a relationship of $V1 \geq V2$ shown in equation (1), preferably $V1/V2 \geq 1.5$ is required. Under the condition of $V1 < V2$, the resin B does not extend in an opening direction on the left as shown in Figure 3 and stays midway. Moreover, the value of V2 has to be 0.5—20 cc/sec shown in equation (2), preferably 1.0—15 cc/sec. Where the value is less than 0.5 cc/sec, the resin is solidified at the gate before terminating the injection to make the inside of the mold unfilled. Where the value exceeds 20 cc/sec, the resin B is all pushed in the opening direction as shown in Figure 4 so that it does not exist in the gate direction.

Next, as for the proportions of the resins being injected, the resin A injected first and the resin A injected last have to meet a relationship of $0.7 \leq A1/A2 \leq 3.5$ shown in equation (3), preferably $1 \leq A1/A2 \leq 2.5$. With $0.7 > A1/A2$, the resin B is likely to be exposed to the surface in the opening as shown in Figure 5. With $A1/A2 > 3.5$, the resin B does not extend up to the opening as shown in Figure 6. The resins A and B are to meet a relationship of

$$B1/(A1+A2+B1) \leq 0.25$$

shown in equation (4), preferably

$$0.03 \leq B1(A1+A2+B1) \leq 0.2.$$

With $B1/(A1+A2+B1) > 0.25$, the amount of the resin B is too large and likely to stay in the vicinity of the opening.

In the conventional method shown in Figure 8, the resin finally injected is a resin B which partially remains at a gate and is likely to be exposed to the bottom of the stretched container. In this instance, the bottom of the container becomes defective and is easy to break. Moreover, in case of MX nylon, etc. the product is whitened owing to moisture absorption and crystallization, providing poor appearance. The undesirous conditions shown in Figures 5 & 7 are given for the same reasons.

However, according to the present invention, the large amount of the resin A is finally injected as a central layer and the gate portion is therefore completely replaced with the resin A without exposure of said resin B.

Since the opening and the bottom near the gate of the multi-layer of the parison are not thinned on stretching, the gas barrier properties of the container are not decreased even if the resin B is absent.

In general, the thickness of the multi-layer parison is 2—6 mm, preferably 3—5 mm. The thickness of the multi-layer container biaxially stretched and blow molded is 200—500 μ, preferably 250—450 μ. In this case, considering gas barrier properties, transparency, mechanical strength, etc., a ratio of the resin B based on the overall parison is 25% or less shown in equation (4), preferably 3—20%.

Examples of the resin A used in this invention include thermoplastic polyester resins, polyolefin resins, polycarbonates, polyacrylonitrile, polyvinyl chloride and polystyrene. The thermoplastic polyester resins are most preferable.

Examples of the resin B used in this invention, i.e. the thermoplastic resin with the gas barrier properties include MX nylons, ethylene-vinyl acetate copolymer resin saponification products, polyacrylonitrile copolymer resins and polyvinylidene chloride resins. The MX nylons are most preferable.

A combination of the thermoplastic polyester resins, above all, polyethylene terephthalate and MX nylons are most preferable because it is excellent in all of transparency, mechanical strength, injection molding properties and stretch blow molding properties.

Such thermoplastic polyester resins are usually polyesters wherein more than 80 mol%, preferably more than 90 mol% of the acid component is terephthalic acid and more than 80 mol%, preferably more than 90 mol% of the glycol component is ethylene glycol. Examples of the residual acid component are isophthalic acid, diphenylether-4,4'-dicarboxylic acid, naphthalene-1,4 or 2,6-dicarboxylic acid, adipic acid, sebasic acid, decane-1,10-dicarboxylic acid and hexahydroterephthalic acid. Examples of the residual glycol component are propylene glycol, 1,4-butane diol, neopentyl glycol, diethylene glycol, cyclohexane dimethanol, 2,2-bis(4-hydroxyphenyl)propane and 2,2-bis(4-hydroxyethoxyphenyl)propane. Further available are polyester resins containing p-oxybenzoic acid, etc. as an oxyacid.

An intrinsic viscosity of these thermoplastic polyester resins is appropriate 0.55 or more, preferably 0.65—1.4. When the intrinsic viscosity is less than 0.55, a multi-layer preform can hardly be obtained in a transparent, amorphous state. In addition, a mechanical strength of the resulting container is not enough.

MX nylons are polymers containing at least 70 mol% of structural units obtained from m-xylylenediamine alone or a xylylenediamine mixture containing m-xylylenediamine and p-xylylenediamine in an amount of less than 30% of the total amount and an α.ω-aliphatic dicarboxylic acid having 6—10 carbon atoms.

Examples of the polymers include homopolymers such as poly-m-xylylene adipamide, poly-m-xylylene sebacamide and poly-m-xylylene speramide, copolymers such as a m-xylylene/p-xylylene adipamide copolymer, m-xylylene/p-xylylene pyperamide copolymer and m-xylylene/p-xylylene azelamide copolymer, and copolymers of these homopolymer or copolymer components and aliphatic diamines such as hexamethylenediamine, cyclic diamines such as piperazine, aromatic diamines such as p-bis-(2-aminoethyl)benzene, aromatic dicarboxylic acids such as terephthalic acid, lactams such as ε-caprolactam, ω-aminocarboxylic acids such as ω-aminoheptoic acid and aromatic aminocarboxylic acids such as p-aminobenzoic acid.

In these polyesters may be incorporated polymers such as nylon 6, nylon 66, nylon 610 and nylon 11.

A relative viscosity of these MX nylons is suitably at least 1.5, preferably 2.0—4.0.

In this invention, one or both of the resins A and B may be mixed, if necessary, with coloring agents, ultraviolet absorbers, antistatic agents, antioxidants, lubricants and nucleating agents within such range as not to impair the purpose of this invention.

A multi-layer container produced by heating a multi-layer parison obtained according to the process of this invention to a stretching temperature and biaxially stretching and blow molding the heated parison through expansion with a stretching rod moving axially in a blowing mold and via blowing of a pressurized gas is excellent in gas barrier properties, transparency and mechanical strength.

In this case, the streching temperature may be approximately the same as that of a parison composed of a thermoplastic polyester resin unit, and a suitable range thereof is 70—130°C. It is advisable to stretch the parison 1—4 times in an axial direction and 2—7 times in a circumferential direction. A more preferable condition is 5—15 times in terms of a stretch ratio for area.

The following Examples and Comparative Examples illustrate the present invention in more detail. Methods for measuring properties are as follows.

(1) Intrinsic viscosity [η] of a polyester resin:
A phenol/tetrachloroethane (6/4 weight ratio) solvent mixture, a measuring temperature of 30°C.

(2) Relative viscosity [η rel.] of a polyamide resin:
1 g of a resin/100 ml of 96% sulfuric acid, a measuring temperature of 25°C.

(3) Haze:
Using NDH-20 manufactured by Nippon Denki Kogyo K. K.

(4) Oxygen permeability:
Using OXTRAN 100 manufactured by Modern Control K. K., a temperature of 20°C, a relative humidity of 65%.

(5) Fill point drop test:

A container marked with a fill point is filled with 4 gas volume (3.7 kg/cm, 20°C) of aqueous carbonic acid solution to a given fill point, and the container is sealed. After it is left at 38°C for 24 hours, the distance between the fill point and the liquid level is measured.

(6) Tensile properties:

According to JIS Z-1702.

Examples 1—5 and Comparative Examples 1—8

Using polyethylene terephthalate (hereinafter abbreviated as PET) with an intrinsic viscosity of 0.75 as a thermoplastic polyester resin and poly-m-xylylene adipamide (hereinafter abbreviated as N-MXD 6) with a relative viscosity of 2.1 as MX nylon, a multi-layer parison 30 mm in outer diameter, 120 mm long and 4 mm thick was molded by a two-cylinder injection molding machine.

Common injection conditions are as follows.

| Cylinder temperatures: PET side | 275°C |
| N-MXD 6 side | 265°C |
| Mold temperature: | 20°C |
| Injection dwell pressure time: | 10 sec |
| Cooling time: | 15 sec |
| Injection rate of N-MXD 6: | 51.4 cc/sec |

The other injection conditions and the states of parisons obtained are shown in Table 1.

Some of the above obtained parisons were heated with a quartz heater until the surface temperature of the parisons reached 95°C, then transferred into a blowing mold, and biaxially stretched and blow molded using a biaxial stretch blow molding machine under such conditions that a moving speed of a stretching rod was 20 cm/sec and a stretch blowing pressure 20 kg/cm². There resulted bottle-shaped hollow multi-layer containers having a total length of 275 mm, an outer diameter of 80 mm and an internal volume of 1000 ml.

The properties of the resulting multi-layer containers are shown in Table 2.

TABLE 1

| | A1 (cc) | A2 (cc) | B1 (cc) | A1/A2 | B1/(A1+A2+B1) | V1 (cc/sec) | V2 (cc/sec) | V1/V2 | Results |
|---|---|---|---|---|---|---|---|---|---|
| Ex. 1 | 15.7 | 13.7 | 6.3 | 1.1 | 0.18 | 38.8 | 10.0 | 3.9 | Fig. 1 |
| Ex. 2 | 17.6 | 14.7 | 3.1 | 1.2 | 0.09 | 38.8 | 10.0 | 3.9 | " |
| Ex. 3 | 16.7 | 15.7 | 1.6 | 1.1 | 0.05 | 38.8 | 10.0 | 3.9 | " |
| Ex. 4 | 17.6 | 14.7 | 3.1 | 1.2 | 0.09 | 38.8 | 1.5 | 25.9 | " |
| Ex. 5 | 16.7 | 15.7 | 1.6 | 1.1 | 0.05 | 38.8 | 14.0 | 2.8 | " |
| Comp. Ex. 1 | 36.3 | — | — | — | — | 30.2 | — | — | Single layer |
| Comp. Ex. 2 | 15.7 | 4.9 | 13.9 | 3.2 | 0.40 | 30.2 | 10.0 | 3.0 | Fig. 8 |
| Comp. Ex. 3 | 24.5 | 4.9 | 6.3 | 5.0 | 0.18 | 30.2 | 10.0 | 3.0 | Fig. 9 |
| Comp. Ex. 4 | 17.6 | 14.7 | 3.1 | 1.2 | 0.09 | 19.9 | 38.8 | 0.5 | Fig. 3 |
| Comp. Ex. 5 | 17.6 | 14.7 | 3.1 | 1.2 | 0.09 | 38.8 | 24.2 | 1.6 | Fig. 4 |
| Comp. Ex. 6 | 9.8 | 19.6 | 3.1 | 0.5 | 0.09 | 38.8 | 10.0 | 3.9 | Fig. 5 |
| Comp. Ex. 7 | 23.5 | 5.9 | 3.1 | 4.0 | 0.09 | 38.8 | 10.0 | 3.9 | Fig. 6 |
| Comp. Ex. 8 | 12.7 | 14.7 | 9.5 | 0.9 | 0.26 | 38.8 | 10.0 | 3.9 | Fig. 7 |

# EP 0 161 625 B1

## TABLE 2

| | Haze (%) | Amount of decrease in oxygen permeability (cc/bottle · day · atm) | Fill point drop (mm) | Tensile yield strength (kgf/cm$^2$) | Tensile strength at break (kgf/cm$^2$) |
|---|---|---|---|---|---|
| Ex. 1 | 6.2 | 0.04 | 14 | 1400 | 1420 |
| Ex. 2 | 3.0 | 0.07 | 13 | 1540 | 1570 |
| Ex. 3 | 2.2 | 0.09 | 10 | 1560 | 1620 |
| Comp. Ex. 1 | 3.0 | 0.30 | 9 | 1600 | 1690 |
| Comp. Ex. 2 | 10.1 | 0.03 | 20 | 1230 | 1230 |

**Claims**

1. A process for producing a multi-layer parison comprising layers made of a thermoplastic resin (resin A) other than a thermoplastic resin (resin B) having gas barrier properties and layers made of resin B, said process comprising alternately injecting the molten resins A and B into a single mold (8) in one injection molding cycle using a molding machine having two injection cylinders (3, 3') for resins A and B, characterized in that said multi-layer parison has a five-layer structure wherein a central layer and two outer layers are made of resin A and two intermediate layers held between the central layer and two outer layers are made of resin B, and injection of the molten resins A and B is carried out in the order of resin A, resin B and resin A and under the conditions to meet the following equations (1)—(4),

$$V1 \geqq V2 \tag{1}$$

$$0.5 \text{ cc/sec} \leqq V2 \leqq 20 \text{ cc/sec} \tag{2}$$

$$0.7 \leqq A1/A2 \leqq 3.5 \tag{3}$$

$$B1/(A1+A2+B1) \leqq 0.25 \tag{4}$$

wherein
V1 is an injection rate per parison of the resin A being injected first,
V2 is an injection rate per parison of the resin A being injected last,
A1 is an injection capacity of the resin A being injected first,
A2 is an injection capacity of the resin A being injected last, and
B1 is an injection capacity of the resin B.

2. The process of claim 1 wherein the resin A is a thermoplastic polyester resin and the resin B is a m-xylylene group-containing polyamide resin.

**Patentansprüche**

1. Verfahren zur Herstellung eines mehrschichtigen Vorformlings mit Schichten aus einem thermoplastischen Harz (Harz A), das ein anderes Harz als ein thermoplastisches Harz (Harz B) mit Gas-Schrankeneigenschaften ist, und Schichten, die aus dem Harz B hergestellt sind, wobei das Verfahren die abwechselnde Einspritzung der geschmolzenen Harze A und B in eine einzige Form (8) in einem einzigen Einspritz-Verformungszyklus unter Verwendung einer Formmaschine umfaßt, welche zwei Einspritzzylinder (3, 3') für die Harze A und B aufweist, dadurch gekennzeichnet, daß der genannte mehrschichtige Vorformling eine fünfschichtige Struktur aufweist, wobei eine Mittelschicht und zwei äußere Schichten aus dem Harz A hergestellt sind und zwei Zwischenschichten, die zwischen der Mittelschicht und den zwei Außenschichten gehalten werden, aus dem Harz B bestehen, und daß das Einspritzen der geschmolzenen Harze A und B in der Reihenfolge: Harz A, Harz B und Harz A unter Bedingungen durchgeführt wird, die den folgenden Gleichungen (1)—(4):

$$V1 \geqq V2 \tag{1}$$

$$0,5 \text{ cc/sec} \leqq V2 \leqq 20 \text{ cc/sec} \tag{2}$$

$$0,7 \leqq A1/A2 \leqq 3,5 \tag{3}$$

$$B1/(A1+A2+B1) \leqq 0,25 \tag{4}$$

6

genügt, worin

V1 die Einspritzgeschwindigkeit pro Vorformling des zuerst eingespritzten Harzes A ist,
V2 die Einspritzgeschwindigkeit pro Vorformling des zuletzt eingespritzten Harzes A ist,
A1 die Einspritzkapazität des zuerst eingespritzten Harzes A ist,
A2 die Einspritzkapazität des zuletzt eingespritzten Harzes A ist und
B1 die Einspritzkapazität des Harzes B ist.

2. Verfahren nach Anspruch 1, dadurch gekennzeichnet, daß das Harz A ein thermoplastisches Polyesterharz ist und daß das Harz B ein m-Xylylengruppen enthaltendes Polyamidharz ist.

**Revendications**

1. Procédé pour fabriquer une paraison multicouche comprenant des couches en une résine thermoplastique (résine A) autre qu'une résine thermoplastique (résine B) ayant des propriétés de barrière pour gaz, et des couches en une résine B, selon lequel on injecte alternativement les résines fondues A et B dans un moule unique (8) selon un cycle de moulage par injection utilisant une machine de moulage à deux cylindres d'injection (3, 3′) pour les résines A et B, procédé caractérisé en ce que la paraison multicouche a une structure à cinq couches dans laquelle une couche centrale et deux couches extérieures sont en une résine A, et deux couches intermédiaires maintenues entre la couche centrale et les deux couches extérieures sont en une résine B, et en ce que l'injection des résines fondues A et B est effectuée dans l'ordre résine A, résine B et résine A et dans des conditions telles que les relations (1) à (4) suivantes soient satisfaites:

$$V1 \geq V2 \tag{1}$$

$$0,5 \ cm^3/s \leq V2 \leq 20 \ cm^3/s \tag{2}$$

$$0,7 \leq A1/A2 \leq 3,5 \tag{3}$$

$$B1/(A1+A2+B1) \leq 0,25 \tag{4}$$

relations dans lesquelles:

V1 représente la vitesse d'injection, par paraison, de la résine A injectée la première,
V2 représente la vitesse d'injection, par paraison, de la résine A injectée la dernière,
A1 représente la capacité d'injection de la résine A injectée la première,
A2 représente la capacité d'injection de la résine A injectée la dernière, et
B1 représente la capacité d'injection de la résine B.

2. Procédé selon la revendication 1 dans lequel la résine A est une résine polyester thermoplastique et la résine B est une résine polyamide contenant des radicaux m-xylylènes.

*Fig. 1*

*Fig. 2*

*Fig. 3*

1

## Fig. 4

## Fig. 5

## Fig. 6

Fig. 7

Fig. 8

Fig. 9

## Fig. 10

## Fig. 11